# EUROPÄISCHE PATENTSCHRIFT

(11) **EP 3 243 112 B1**
(45) Veröffentlichungstag und Bekanntmachung des Hinweises auf die Patenterteilung: **17.04.2019**
(21) Anmeldenummer: 15705238.2
(22) Anmeldetag: 09.02.2015
(51) Int. Cl.: G05B 19/418

(54) **PRODUKTIONSMODUL, PRODUKTIONSSYSTEM SOWIE VERFAHREN ZUM BETREIBEN EINES PRODUKTIONSMODULS**
PRODUCTION MODULE, PRODUCTION SYSTEM, AND METHOD FOR OPERATING A PRODUCTION MODULE
MODULE DE PRODUCTION, SYSTÈME DE PRODUCTION AINSI QUE PROCÉDÉ DE FONCTIONNEMENT D'UN MODULE DE PRODUCTION

(43) Veröffentlichungstag der Anmeldung: 15.11.2017
(73) Patentinhaber: Siemens Aktiengesellschaft, 80333 München (DE)
(72) Erfinder: FEITEN, Wendelin, 85579 Neubiberg (DE); PIRKER, Michael, 83661 Lenggries (DE); WURM, Kai, 81739 München (DE); BUSCHMANN, Frank, 80336 München (DE); LAWITZKY, Gisbert, 81477 München (DE); ZAHORCAK, Vladimir, 900 32 Borinka (SK)
(86) Internationale Anmeldenummer: PCT/EP2015/052642
(87) Internationale Veröffentlichungsnummer: WO 2016/128020

(56) Entgegenhaltungen:
- HADELI VALCKENAERS P ET AL: "Multi-agent coordination and control using stigmergy", COMPUTERS IN INDUSTRY, ELSEVIER SCIENCE PUBLISHERS. AMSTERDAM, NL, Bd. 53, Nr. 1, 1. Januar 2004 (2004-01-01) , Seiten 75-96, XP004472757, ISSN: 0166-3615, DOI: 10.1016/S0166-3615(03)00123-4

## Beschreibung

Zeitgemäße Produktionssysteme zur Herstellung oder Bearbeitung von technischen Produkten weisen in der Regel eine Vielzahl von spezifischen, interagierenden Produktionsmodulen auf und werden zunehmend komplexer. An einem zu produzierenden oder zu bearbeitenden Produkt sind in der Regel eine Vielzahl von Bearbeitungs-, Produktions- oder Handhabungsschritten auszuführen, wofür im Produktionssystem eine Vielzahl von darauf spezialisierten Produktionsmodulen, wie z.B. Roboter, CNC-Maschinen, 3D-Drucker, Reaktoren, Brenner, Heizanlagen oder Förderbänder vorgesehen sind. Zur Bearbeitung ist das Produkt auf einem Weg durch das Produktionssystem zu transportieren, der alle für die auszuführenden Arbeitsschritte spezifischen Produktionsmodule in der vorgesehenen Bearbeitungsreihenfolge erreicht.

Es ist bekannt, zur Produktionssteuerung im Produktionssystem eine zentrale Einheit vorzusehen, in der die im Produktionssystem verfügbaren Produktionsmodule und deren spezifische Funktionalitäten angegeben sind und verwaltet werden. Diese Angaben umfassen insbesondere auch die Transportmöglichkeiten für Produkte im Produktionssystem. In der zentralen Einheit werden die Wege geplant, die die zu bearbeitenden Produkte durch das Produktionssystem nehmen sollen. Die geplanten Wege werden jeweils an die beteiligten Transportmodule übermittelt, die die Produkte entsprechend dieser zentralen Vorgaben durch das Produktionssystem befördern.

Ein Ausfall, Austausch oder ein Hinzufügen eines Produktionsmoduls im Produktionssystem erfordert allerdings in der Regel, dass die Produktwege durch die zentrale Einheit neu geplant werden und die neu geplanten Produktwege zu den beteiligten Produktionsmodulen übermittelt werden. Dies kann zu Ausfallzeiten für das gesamte Produktionssystem führen. Solche Ausfallzeiten des gesamten Produktionssystems können auch bei Ausfall der zentralen Einheit auftreten.

Es ist Aufgabe der vorliegenden Erfindung, ein Produktionsmodul zum Bearbeiten oder Handhaben eines Produkts, ein Produktionssystem sowie ein Verfahren zum Betreiben eines Produktionsmoduls anzugeben, die flexibler auf Änderungen im Produktionssystem reagieren können.

Gelöst wird diese Aufgabe durch ein Produktionsmodul nach Patentanspruch 1, durch ein Produktionssystem nach Patentanspruch, 13, durch ein Verfahren nach Patentanspruch 14 sowie durch ein Computerprogrammprodukt nach Patentanspruch 15.

Erfindungsgemäß sind ein Produktionsmodul zum Bearbeiten oder Handhaben eines Produkts in einem eine Vielzahl von Produktionsmodulen aufweisenden Produktionssystem sowie ein Verfahren zum Betreiben des Produktionsmoduls vorgesehen. Ein solches Produkt kann beispielsweise ein Werkstück oder Produkt in verschiedenen Phasen eines Fertigungs-, Bearbeitungs- oder Verarbeitungsprozesses sein und insbesondere auch ein Ausgangs-, Zwischen- oder Endprodukt. Das Produktionsmodul kann insbesondere eine zur Produktion, Bearbeitung oder Verarbeitung des Produkts beitragende Vorrichtung des Produktionssystems sein, z.B. ein Roboter, eine CNC-Maschine, ein 3d-Drucker, ein Reaktor, ein Brenner, eine Heizanlage, ein Förderband oder ein anderes Transportmodul. Erfindungsgemäß weist das Produktionsmodul ein Produkterfassungsmodul zum Einlesen von dem Produkt zugeordneten Produktparametern sowie Übergabeports zum Weitergeben des Produkts an zum Produktionsmodul benachbarte Produktionsmodule des Produktionssystems auf. Ein Interaktionsmodul dient zum Zuweisen eines jeweiligen benachbarten Produktionsmoduls zu einem der Übergabeports. Weiterhin ist ein Datenspeicher zum Speichern einer lokalen Zuordnungstabelle vorgesehen, in der zum Produktionsmodul nicht benachbarte Beförderungsziele im Produktionssystem jeweils einem der Übergabeports zugeordnet sind. Ein Abgleichmodul dient zum iterativen Einlesen von erster Zuordnungsinformation einer korrespondierenden Zuordnungstabelle eines ersten benachbarten Produktionsmoduls, zum iterativen Aufbauen der lokalen Zuordnungstabelle anhand der eingelesenen ersten Zuordnungsinformation sowie zum iterativen Weiterleiten von zweiter Zuordnungsinformation der lokalen Zuordnungstabelle an ein zweites benachbartes Produktionsmodul. Darüber hinaus ist ein Weitergabemodul vorgesehen zum Ermitteln eines Beförderungsziels für das Produkt im Produktionssystem anhand der eingelesenen Produktparameter, zum Selektieren eines Übergabeports, der dem ermittelten Beförderungsziel in der lokalen Zuordnungstabelle zugeordnet ist, sowie zum Weitergeben des Produkts über den selektierten Übergabeport.

Ein wesentlicher Vorteil der Erfindung ist darin zu sehen, dass eine zentrale Festlegung der Produkttransportwege im Produktionssystem nicht erforderlich ist. Ein Ausfall, Austausch oder ein Hinzufügen eines als Beförderungsziel fungierenden Produktionsmoduls im Produktionssystem kann in den lokalen Zuordnungstabellen der zu diesem Produktionsmodul benachbarten Produktionsmodule durch entsprechende Änderung von Zuordnungen dargestellt werden. Diese geänderten Zuordnungen können dann schrittweise, jeweils über benachbarte Produktionsmodule, d.h. jeweils mittels lokaler Interaktion über das Produktionssystem verbreitet werden. Eine vollständige zentrale Neuplanung der Produktwege kann so in der Regel vermieden werden.

Vorteilhafte Ausführungsformen und Weiterbildungen der Erfindung sind in den abhängigen Ansprüchen angegeben.

Nach einer vorteilhaften Ausführungsform der Erfindung kann das Abgleichmodul dazu eingerichtet sein, ein in der korrespondierenden Zuordnungstabelle des ersten benachbarten Produktionsmoduls angegebenes Beförderungsziel in der lokalen Zuordnungstabelle einem Übergabeport zuzuordnen, der diesem ersten benachbarten Produktionsmodul zugewiesen ist. Auf diese Weise lassen sich Angaben über welche benachbarten Produktionsmodule ein jeweiliges Beförderungsziel erreichbar ist, schrittweise durch lokale Interaktion über das Produktionssystem verbreiten.

Weiterhin kann die erste Zuordnungsinformation, die zweite Zuordnungsinformation und/oder die lokale Zuordnungstabelle einem Beförderungsziel eine physikalische Nebenbedingung zuordnen, die das Produkt auf einem Transportweg zu diesem Beförderungsziel zu erfüllen hat. Das Weitergabemodul kann dann dazu eingerichtet sein, die physikalische Nebenbedingung mit den eingelesenen Produktparametern abzugleichen und abhängig davon die Ermittlung des Beförderungsziels und/oder die Selektion des Übergabeports auszuführen. Eine derartige physikalische Nebenbedingung kann z.B. Angaben über ein maximal zulässiges Gewicht und/oder maximal zulässige Abmessungen des Produkts für den Transportweg zu diesem Beförderungsziel umfassen. Genügt das Produkt der physikalischen Nebenbedingung für ein jeweiliges Beförderungsziel bzw. einen jeweiligen Transportweg nicht, kann durch das Produktionsmodul selbständig ein anderes Beförderungsziel bzw. ein anderer Transportweg ermittelt werden.

Das Abgleichmodul kann ferner dazu eingerichtet sein, die einem Beförderungsziel in der ersten Zuordnungsinformation zugeordnete physikalische Nebenbedingung mit einer lokalen physikalischen Nebenbedingung des Produktionsmoduls zu verknüpfen und die verknüpfte physikalische Nebenbedingung dem Beförderungsziel in der lokalen Zuordnungstabelle sowie in der zweiten Zuordnungsinformation zuzuordnen. Auf diese einfache Weise können Angaben über kumulative Effekte von physikalischen Nebenbedingungen spezifischer Produktionsmodule und/oder Transportwege schrittweise, durch lokale Interaktion über das Produktionssystem verbreitet werden.

Vorzugsweise kann die erste Zuordnungsinformation, die zweite Zuordnungsinformation und/oder die lokale Zuordnungstabelle einem Beförderungsziel eine Aufwandsinformation über einen Beförderungsaufwand zu diesem Beförderungsziel, eine Funktionalitätsinformation über eine Funktionalität dieses Beförderungsziels, eine Verfügbarkeitsinformation über eine Verfügbarkeit der Funktionalität und/oder eine Änderungsinformation über eine Änderung der Funktionalität oder der Verfügbarkeit zuordnen. Dies erlaubt es, aktuelle, ggf. geänderte Angaben über ein jeweiliges Beförderungsziel hinsichtlich des Beförderungsaufwands, wie z.B. Beförderungszeit, Beförderungskosten und/oder Beförderungsressourcen, hinsichtlich der Funktionalität, wie z.B. Bohren, Schweißen, Fräsen, Transportieren und/oder hinsichtlich der Verfügbarkeit schrittweise, durch lokale Interaktion über das Produktionssystem zu verbreiten.

Das Weitergabemodul kann dazu eingerichtet sein, die Ermittlung des Beförderungsziels und/oder die Selektion des Übergabeports abhängig von der dem Beförderungsziel zugeordneten Aufwandsinformation, Funktionalitätsinformation, Verfügbarkeitsinformation und/oder Änderungsinformation auszuführen. Auf diese Weise kann das Produktionsmodul anhand einer für einen nachfolgenden Bearbeitungsschritt benötigten Funktionalität, einem jeweiligen Beförderungsaufwand und/oder einer aktuellen Verfügbarkeit der Funktionalität selbständig darüber entscheiden, wohin das Produkt weitergegeben wird.

Vorzugsweise kann die Verfügbarkeitsinformation eine Zeitangabe über einen Zeitraum, in dem die Funktionalität zur Verfügung steht oder über einen Zeitpunkt einer Änderung der Funktionalität oder der Verfügbarkeit umfassen.

Weiterhin kann die dem Beförderungsziel zugeordnete Aufwandsinformation eine Transportzeit zu diesem Beförderungsziel umfassen. Das Weitergabemodul kann dann dazu eingerichtet sein, die Ermittlung des Beförderungsziels und/oder die Selektion des Übergabeports abhängig von der Zeitangabe und der Transportzeit auszuführen. Dies gestattet eine Optimierung der Transportzeiten zum Beförderungsziel.

Nach einer vorteilhaften Ausführungsform der Erfindung kann das Abgleichmodul dazu eingerichtet sein, ein Beförderungsziel, das in korrespondierenden Zuordnungstabellen mehrerer erster benachbarter Produktionsmodule angegeben ist, anhand einer darin jeweils zugeordneten Aufwandsinformation einem Übergabeport in der lokalen Zuordnungstabelle zuzuordnen, der einem benachbarten Produktionsmodul mit einem minimalen Beförderungsaufwand zu diesem Beförderungsziel zugewiesen ist. Alternativ oder zusätzlich kann das Abgleichmodul dazu eingerichtet sein, für ein Beförderungsziel, das in korrespondierenden Zuordnungstabellen mehrerer erster benachbarter Produktionsmodule angegeben ist, mehrere Einträge in der lokalen Zuordnungstabelle mit jeweils zugeordneter Aufwandsinformation anzulegen. Hierbei kann das Weitergabemodul dazu eingerichtet sein, einen Übergabeport zu selektieren, der einem benachbarten Produktionsmodul mit einem minimalen Beförderungsaufwand zu diesem Beförderungsziel zugewiesen ist. Auf diese Weise kann ein jeweiliger Beförderungsaufwand zu einem Beförderungsziel lokal minimiert werden, und es können Angaben über den minimierten Beförderungsaufwand mittels der zweiten Zuordnungsinformation schrittweise, durch lokale Interaktion im Produktionssystem verbreitet werden.

Nach einer vorteilhaften Ausführungsform der Erfindung kann das Interaktionsmodul dazu eingerichtet sein, benachbarte Produktionsmodule, an die das Produkt weitergegeben werden kann, dynamisch zu detektieren und infolge einer solchen Detektion eine Änderungsinformation zu generieren. Auf diese Weise kann das Produktionsmodul selbständig und flexibel auf neu angekoppelte, geänderte oder entfernte Produktionsmodule reagieren und benachbarte Produktionsmodule mittels der generierten Änderungsinformation über eine neue Konfiguration informieren. Die Information über die neue Konfiguration kann so schrittweise, durch lokale Interaktion über das Produktionssystem verbreitet werden.

Vorteilhafterweise kann das Abgleichmodul dazu eingerichtet sein, infolge einer eintreffenden Änderungsinformation einen Iterationsschritt beim Einlesen erster Zuordnungsinformation, beim Aufbauen der lokalen Zuordnungstabelle und/oder beim Weiterleiten zweiter Zuordnungsinformation auszuführen. Auf diese Weise kann durch das Eintreffen der Änderungsinformation eine Aktualisierung der eigenen lokalen Zuordnungstabelle sowie der korrespondierenden Zuordnungstabellen benachbarter Produktionsmodule ausgelöst werden, so dass sich Angaben über Änderungen im Produktionssystem schrittweise, durch lokale Interaktion über das Produktionssystem verbreiten.

Darüber hinaus kann die lokale Zuordnungstabelle eine Versionsinformation enthalten, die infolge einer eintreffenden Änderungsinformation und/oder eines Iterationsschrittes beim Einlesen erster Zuordnungsinformation, beim Aufbauen der lokalen Zuordnungstabelle und/oder beim Weiterleiten zweiter Zuordnungsinformation geändert wird. Das Abgleichmodul kann dann dazu eingerichtet sein, beim Aufbau der lokalen Zuordnungstabelle deren Versionsinformation mit einer Version der ersten Zuordnungsinformation zu vergleichen und abhängig davon die lokale Zuordnungstabelle zu aktualisieren.

Ein Ausführungsbeispiel der Erfindung wird nachfolgend anhand der Zeichnung näher erläutert. Dabei zeigen jeweils in schematischer Darstellung
- Figur 1: ein erfindungsgemäßes Produktionsmodul in Interaktion mit benachbarten Produktionsmodulen,
- Figur 2: ein Produktionssystem mit mehreren erfindungsgemäßen Produktionsmodulen und
- Figur 3: eine lokale Zuordnungstabelle eines erfindungsgemäßen Produktionsmoduls.

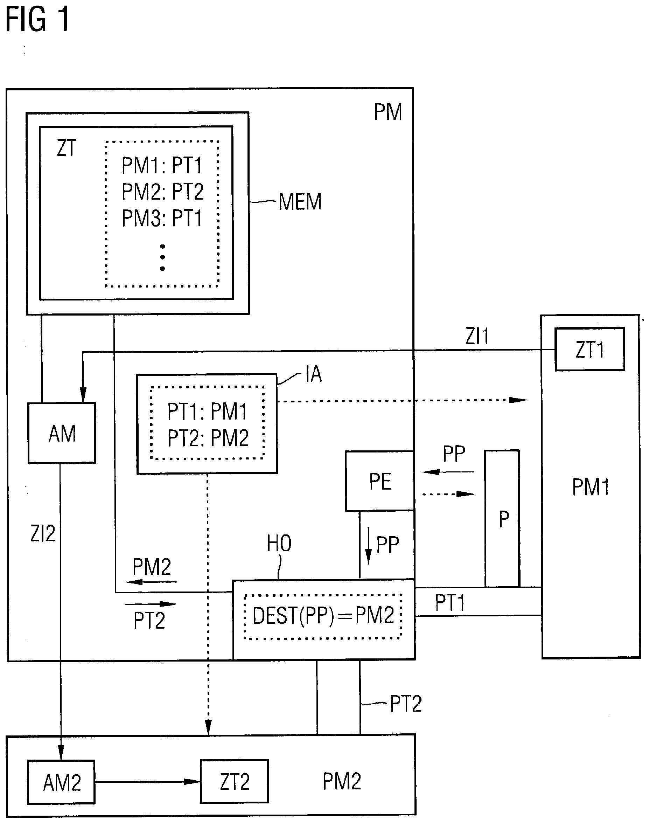

Figur 1 veranschaulicht ein erfindungsgemäßes Produktionsmodul PM zum Bearbeiten oder Handhaben eines Produkts P in einem Produktionssystem. Ein solches Produktionssystem, z.B. eine Fertigungsanlage zur Herstellung, Bearbeitung oder Verarbeitung von Werkstücken oder anderen Produkten weist in der Regel eine Vielzahl von Produktionsmodulen mit spezifischer Funktionalität auf. Das Produkt P kann ein Werkstück oder allgemein ein beliebiges körperliches Produkt in verschiedenen Phasen eines Fertigungs-, Bearbeitungs- oder Verarbeitungsprozesses, insbesondere auch ein Ausgangs-, Zwischen- oder Endprodukt sein.

Dem Produktionsmodul PM benachbart sind benachbarte Produktionsmodule PM1 und PM2. Die benachbarten Produktionsmodule PM1 und PM2 können hierbei physikalisch oder logisch benachbart sein.

Das Produktionsmodul PM und die zu ihm benachbarten Produktionsmodule PM1 und PM2 können jeweils eine zur Produktion, Bearbeitung, Verarbeitung und/oder Handhabung des Produkts beitragende Vorrichtung des Produktionssystems mit spezifischer Funktionalität sein, z.B. ein Roboter, eine CNC-Maschine, ein 3D-Drucker, ein Reaktor, ein Brenner, eine Heizanlage oder ein Förderband oder ein anderes Transportmodul. Insbesondere kann ein jeweiliges Produktionsmodul ein sog. Cyber-Physical-Module (CPM) oder Cyber-Physical-Production-Module (CPPM) sein.

Das Produktionsmodul PM kann mit dem benachbarten Produktionsmodul PM1 mittels eines zwischen PM und PM1 vorgesehenen Übergabeports PT1 interagieren. Entsprechend ist zur Interaktion des Produktionsmoduls PM mit dem benachbarten Produktionsmodul PM2 ein Übergabeport PT2 vorgesehen. Die Übergabeports PT1 und PT2, häufig auch als Handover-Points bezeichnet, dienen zum Weitergeben des Produkts P zwischen benachbarten Produktionsmodulen. Die Übergabeports PT1 und PT2 können jeweils z.B. als spezifischer räumlicher Bereich definiert sein, in dem das Produkt P von einem Produktionsmodul abgegeben und vom anderen Produktionsmodul aufgenommen wird. Alternativ oder zusätzlich können die Übergabeports PT1 und PT2 jeweils als logischer Port definiert sein, bei dem derselbe räumliche Bereich zur Weitergabe an verschiedene benachbarte Produktionsmodule vorgesehen ist und verschiedene Aufnehmer oder Empfänger des Produkts durch eine individuelle Portkennung unterschieden werden.

Im vorliegenden Ausführungsbeispiel ist das Produkt P auf dem Übergabeport PT1 zwischen dem Produktionsmodul PM und dem benachbarten Produktionsmodul PM1 positioniert. Zum Erkennen und/oder Identifizieren des Produkts P verfügt das Produktionsmodul PM über ein Produkterfassungsmodul PE mit einem Produktsensor. Ein solcher Produktsensor kann z.B. mittels eines sogenannten RFID-Chips (RFID: Radio-frequency identification) realisiert sein, der Daten aus einem entsprechenden am Produkt P angebrachten RFID-Chip ausliest. Insbesondere kann das Produkterfassungsmodul PE, wie durch einen punktierten Pfeil in Figur 1 angedeutet, Produktparameter PP vom Produkt P abfragen, die z.B. Angaben über Bearbeitung, Fertigung und/oder Struktur des Produkts P umfassen.

Das Produktionsmodul PM verfügt weiterhin über ein Interaktionsmodul IA zum Zuweisen von benachbarten Produktionsmodulen zu Übergabeports. Im vorliegenden Ausführungsbeispiel wird durch das Interaktionsmodul IA das benachbarte Produktionsmodul PM1 dem Übergabeport PT1 und das benachbarte Produktionsmodul PM2 dem Übergabeport PT2 zugewiesen. Weiterhin kann das Interaktionsmodul IA, wie in Figur 1 durch punktierte Pfeile angedeutet, benachbarte Produktionsmodule, hier PM1 und PM2, an die das Produkt P weitergegeben werden kann, dynamisch detektieren. Infolge einer solchen Detektion generiert das Interaktionsmodul IA eine Änderungsinformation, z.B. ein Triggersignal, um damit das Produktionsmodul PM oder andere benachbarte Produktionsmodule im Produktionssystem über ein Hinzufügen, einen Wechsel oder ein Entfernen eines benachbarten Produktionsmoduls zu informieren.

Das Produktionsmodul PM weist weiterhin einen Datenspeicher MEM, z.B. eine Datenbank, mit einer darin gespeicherten lokalen Zuordnungstabelle ZT auf. In der lokalen Zuordnungstabelle ZT werden vom Produktionsmodul PM aus erreichbare Produktionsmodule des Produktionssystems, hier PM1, PM2 sowie ein nicht benachbartes Produktionsmodul PM3 und gegebenenfalls weitere nicht benachbarte Produktionsmodule, als Beförderungsziele jeweils einem der Übergabeports, hier PT1 bzw. PT2, zugeordnet. Im vorliegenden Ausführungsbeispiel ist dem benachbarten Produktionsmodul PM1 der Übergabeport PT1, dem benachbarten Produktionsmodul PM2 der Übergabeport PT2 sowie dem nicht benachbarten Produktionsmodul PM3 der Übergabeport PT1 zugeordnet. Die lokale Zuordnungstabelle ZT bildet auf diese Weise eine lokale Topologie von durch das Produktionssystem führenden Produktwegen ab. Die lokale Topologie repräsentiert hierbei die Information, über welche Übergabeports ein jeweiliges Beförderungsziel im Produktionssystem für das Produkt P erreichbar ist.

Das Produktionsmodul PM verfügt weiterhin über ein Abgleichmodul AM, das erste Zuordnungsinformation ZI1 aus einer korrespondierenden lokalen Zuordnungstabelle ZT1 des benachbarten Produktionsmoduls PM1 iterativ und ereignisgesteuert einlesen kann, die lokale Zuordnungstabelle ZT anhand der eingelesenen ersten Zuordnungsinformation ZI1 iterativ und ereignisgesteuert aufbauen kann sowie zweite Zuordnungsinformation ZI2 der lokalen Zuordnungstabelle ZT an das benachbarte Produktionsmodul PM2 iterativ und ereignisgesteuert weiterleiten kann. Im benachbarten Produktionsmodul PM2 wird dann eine korrespondierende lokale Zuordnungstabelle ZT2 anhand der zweiten Zuordnungsinformation ZI2 aktualisiert. Die zweite Zuordnungsinformation ZI2 wirkt somit für das benachbarte Produktionsmodul PM2 wie die erste Zuordnungsinformation ZI1 für das Produktionsmodul PM. Die vorstehenden ereignisgesteuerten Vorgänge können vorzugsweise durch eine eintreffende Änderungsinformation ausgelöst werden. Durch das Einlesen der ersten Zuordnungsinformation ZI1, der Aktualisierung der lokalen Zuordnungstabelle ZT anhand dieser ersten Zuordnungsinformation ZI1 und der Weiterleitung der zweiten Zuordnungsinformation ZI2 können Angaben über Änderungen im Produktionssystem schrittweise, durch lokale Interaktion über das Produktionssystem propagiert und damit verbreitet werden.

Vorzugsweise wird durch die Abgleichmodule der erfindungsgemäßen Produktionsmodule des Produktionssystems jeweils der im Wesentlichen gleiche Algorithmus für die Propagation von Zuordnungsinformation lokal ausgeführt. Somit ist keine zentrale Synchronisierung aller Produktionsmodule erforderlich.

Weiterhin weist das Produktionsmodul PM ein Weitergabemodul HO auf, das an das Produkterfassungsmodul PE sowie an den Datenspeicher MEM gekoppelt ist. Das Weitergabemodul HO dient zum Ermitteln eines Beförderungsziels, hier PM2, für das Produkt P anhand der eingelesenen Produktparameter PP, zum Selektieren eines Übergabeports, hier PT2, der dem ermittelten Beförderungsziel PM2 in der lokalen Zuordnungstabelle ZT zugeordnet ist sowie zum Weitergeben des Produkts P über den selektierten Übergabeport PT2. Das Weitergeben des Produkts P kann eine Weiterbeförderung durch physikalische Bewegung oder auch eine logische Weitergabe, z.B. durch Abstellen am Übergabeport PT2 und Senden eines Signals an das aufnehmende benachbarte Produktionsmodul PM2, umfassen. Allgemein ist unter einer Weitergabe des Produkts P zu verstehen, dass sich das Produkt zunächst im Wirkungsbereich eines ersten Produktionsmoduls, z.B. PM, befindet und zeitlich später im Wirkungsbereich eines zweiten Produktionsmoduls, z.B. PM2. In diesem Sinne wird das Produkt vom ersten Produktionsmodul an das zweite Produktionsmodul weitergegeben, auch wenn das zweite Produktionsmodul das Produkt aus dem ersten Produktionsmodul entnimmt.

Das Weitergabemodul HO empfängt vom Produkterfassungsmodul PE die Produktparameter PP und bestimmt anhand der Produktparameter PP ein Beförderungsziel DEST für das Produkt P. Im vorliegenden Ausführungsbeispiel wird als Beförderungsziel DEST das benachbarte Produktionsmodul PM2 bestimmt, d.h. DEST(PP)=PM2. In der Regel werden als Beförderungsziele DEST auch zum Produktionsmodul PM nicht benachbarte Produktionsmodule des Produktionssystems bestimmt.

Im vorliegenden Ausführungsbeispiel wird eine Angabe über das ermittelte Beförderungsziel PM2 vom Weitergabemodul HO zum Datenspeicher MEM übermittelt und eine Angabe über den diesem Beförderungsziel in der lokalen Zuordnungstabelle ZT zugeordneten Übergabeport, hier PT2, an das Weitergabemodul HO zurück übertragen. Anhand dieser Angabe selektiert das Weitergabemodul HO den Übergabeport PT2 zur Weitergabe des Produkts P an das benachbarte Produktionsmodul PM2.

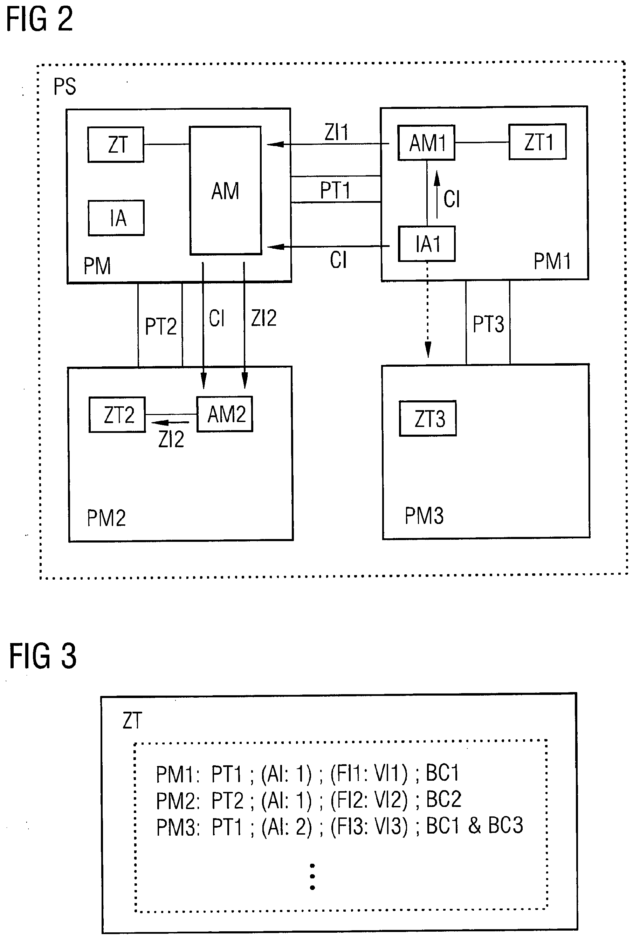

Figur 2 zeigt in schematischer Darstellung ein Produktionssystem PS mit einer Vielzahl von erfindungsgemäßen Produktionsmodulen PM, PM1, PM2 sowie PM3. Es sei angenommen, dass die dargestellten Produktionsmodule PM, PM1, PM2 und PM3 jeweils als erfindungsgemäße Produktionsmodule entsprechend dem in Figur 1 dargestellten Produktionsmodul PM ausgestattet sind. Aus Übersichtlichkeitsgründen sind indes nicht alle Komponenten der Produktionsmodule PM, PM1, PM2 und PM3 in Figur 2 dargestellt.

Das Produktionsmodul PM ist über den Übergabeport PT1 an das benachbarte Produktionsmodul PM1 sowie über den Übergabeport PT2 an das benachbarte Produktionsmodul PM2 gekoppelt. Darüber hinaus ist das Produktionsmodul PM3 über einen Übergabeport PT3 an das Produktionsmodul PM1 gekoppelt. Aus Sicht des Produktionsmoduls PM sind demnach die Produktionsmodule PM1 und PM2 benachbarte Beförderungsziele, während das Produktionsmodul PM3 ein zum Produktionsmodul PM nicht benachbartes Beförderungsziel ist. Wie schon im Zusammenhang mit Figur 1 erläutert, weist das Produktionsmodul PM die lokale Zuordnungstabelle ZT, das an diese gekoppelte Abgleichmodul AM sowie das Interaktionsmodul IA auf. Das Produktionsmodul PM1 verfügt über die korrespondierende Zuordnungstabelle ZT1, ein daran angekoppeltes Abgleichmodul AM1 sowie ein an das Abgleichmodul AM1 gekoppeltes Interaktionsmodul IA1. Das Produktionsmodul PM2 weist die korrespondierende Zuordnungstabelle ZT2 sowie das daran angekoppelte Abgleichmodul AM2 auf. Schließlich verfügt das Produktionsmodul PM3 über eine korrespondierende Zuordnungstabelle ZT3. Die korrespondierenden Zuordnungstabellen ZT1, ZT2 und ZT3 stellen für das Produktionsmodul PM1, PM2 bzw. PM3 jeweils deren lokale Zuordnungstabelle dar.

In dem Produktionssystem PS werden Produkte vorzugsweise dezentral gefertigt. Anweisungen, wie ein Produkt zu fertigen ist, werden bei dem Produkt und/oder dem Produkt zugeordnet gespeichert. Wege, die ein jeweiliges Produkt während seiner Produktion oder Bearbeitung durch das Produktionssystem PS nimmt, müssen nicht vorgegeben sein, sondern können vorzugsweise lokal schrittweise bestimmt werden. Auch die konkreten Bearbeitungsstationen, d.h. Produktionsmodule, müssen nicht vorgegeben werden, sondern können - vorzugsweise lokal - während des Produktionsprozesses ermittelt werden. Ein Beförderungsziel eines Produkts kann insbesondere ein spezifisch vorgegebenes Produktionsmodul, eines von mehreren Produktionsmodulen eines bestimmten Typs oder eines von mehreren Produktionsmodulen, die eine spezifische Funktionalität anbieten, sein. Vorteilhafterweise müssen die im Produktionssystem PS verfügbaren Produktionsmodule einschließlich der für den Transport von Produkten geeigneten Fördermittel nicht statisch festgelegt oder a priori bekannt sein, sondern können auch während des Betriebs des Produktionssystems PS hinzugefügt, ausgetauscht oder entfernt werden.

Für das vorliegende Ausführungsbeispiel sei angenommen, dass das Produktionsmodul PM3 dem Produktionssystem PS neu hinzugefügt wurde. Dies wird vom Interaktionsmodul IA1 des zum Produktionsmodul PM3 benachbarten Produktionsmoduls PM1 dynamisch detektiert. Diese Detektion ist in Figur 2 durch einen punktierten Pfeil angedeutet. Das Interaktionsmodul IA1 weist infolgedessen das detektierte Produktionsmodul PM3 dem Übergabeport PT3 zu, über den Produkte zwischen den Produktionsmodulen PM1 und PM3 weitergegeben werden können. Infolge der Detektion generiert das Interaktionsmodul IA1 eine Änderungsinformation CI, die anzeigt, dass das Produktionsmodul PM3 für das Produktionsmodul PM1 verfügbar ist. Allgemein kann die Änderungsinformation CI eine Angabe über jegliche Änderung der Verfügbarkeit oder einer Funktionalität des Produktionsmoduls umfassen. Im vorliegenden Ausführungsbeispiel wird die Änderungsinformation CI vom Interaktionsmodul IA1 zum Abgleichmodul AM1 sowie zum Abgleichmodul AM übermittelt. Durch die Übermittlung der Änderungsinformation CI werden die Abgleichmodule AM1 und AM dazu veranlasst, jeweils die lokale Zuordnungstabelle ZT1 bzw. ZT zu aktualisieren. Die Änderungsinformation CI dient hier also gewissermaßen als Triggersignal für die Aktualisierung der lokalen Zuordnungstabellen.

Aufgrund der lokalen Detektion verfügbarer Produktionsmodule und/oder Funktionalitäten wird im Produktionssystem PS keine zentrale Stelle benötigt, in der die verfügbaren Produktionsmodule und ihre Schnittstellen oder Verbindungen zu verwalten sind. Vielmehr werden z.B. neu hinzukommende Produktionsmodule mit ihren unmittelbar benachbarten Produktionsmodulen verbunden und die nunmehr benachbarten Produktionsmodule können ihre jeweilige lokale Information hinsichtlich der Verfügbarkeit von Produktionsmodulen und/oder Funktionalitäten austauschen. Durch schrittweise Propagation dieser nur unter unmittelbar benachbarten Produktionsmodulen ausgetauschten Information über Verfügbarkeit und Funktionalität kann diese Information über das Produktionssystem PS verbreitet werden.

Indem ein jeweiliges Produktionsmodul lokal feststellen kann, zu welchen anderen Produktionsmodulen es benachbart ist, und ob ein Übergabeport zu einem jeweiligen benachbarten Produktionsmodul existiert, ist es möglich, eine tatsächlich bestehende Struktur oder Topologie des Produktionssystems PS aus einem aktuellen physikalischen Aufbau des Produktionssystems dynamisch abzuleiten. Dadurch werden Kapazitätsanpassungen des Produktionssystems PS vereinfacht. Wird z.B. ein Produktionsmodul in ein bestehendes Produktionssystem eingefügt, bleiben in der Regel erhebliche Teile einer Beschreibung der möglichen Produktwege durch das Produktionssystem und der für die Produkte zugänglichen Funktionalitäten im Wesentlichen unverändert. Die anzupassenden Teile dieser Beschreibung können dann durch lokale schrittweise Propagation von Änderungsinformation automatisch angepasst werden.

Figur 3 zeigt die lokale Zuordnungstabelle ZT in detaillierterer Darstellung. Die korrespondierenden Zuordnungstabellen ZT1, ZT2 und ZT3 sind analog zur dargestellten lokalen Zuordnungstabelle ZT aufgebaut. In der lokalen Zuordnungstabelle ZT ist für die im Produktionssystem PS vom Produktionsmodul PM aus erreichbaren Beförderungsziele, hier die benachbarten Produktionsmodule PM1, PM2 sowie die nicht benachbarten Produktionsmodule PM3,... des Produktionssystems PS jeweils mindestens ein Eintrag vorgesehen. Den Beförderungszielen ist jeweils ein Übergabeport zugeordnet, über den das Produkt P an ein benachbartes Produktionsmodul weitergegeben werden kann, um schließlich zum Beförderungsziel zu gelangen.

Im vorliegenden Ausführungsbeispiel ist dem benachbarten Produktionsmodul PM1 der Übergabeport PT1, dem benachbarten Produktionsmodul PM2 der Übergabeport PT2 sowie dem nicht benachbarten Produktionsmodul PM3 der Übergabeport PT1 zugeordnet. Die letztere Zuordnung spiegelt wider, dass ein vom Produktionsmodul PM an das nicht benachbarte Produktionsmodul PM3 zu beförderndes Produkt über das benachbarte Produktionsmodul PM1 zum Produktionsmodul PM3 befördert werden kann. Auf diese Weise spiegelt die lokale Zuordnungstabelle ZT eine Topologie des Produktionssystems wider und bildet diese auf lokale Nachbarschaftsverhältnisse ab.

Ferner ist einem jeweiligen Beförderungsziel eine Aufwandsinformation AI über einen Beförderungsaufwand zu diesem Beförderungsziel zugeordnet. Dies kann Angaben über eine Transportzeit, Beförderungskosten und/oder Beförderungsressourcen umfassen. Im vorliegenden Ausführungsbeispiel umfasst die Aufwandsinformation AI eine Angabe über eine Anzahl erforderlicher Weitergaben vom Produktionsmodul PM bis zum Beförderungsziel. Diese Angabe repräsentiert gewissermaßen einen Abstand zum Beförderungsziel im Produktionssystem PS. Im vorliegenden Ausführungsbeispiel erfordert die Beförderung des Produkts P zu den benachbarten Beförderungszielen PM1 und PM2 jeweils eine Weitergabe, während zur Beförderung zum Beförderungsziel PM3 zwei Weitergaben erforderlich sind. Darüber hinaus ist einem jeweiligen Beförderungsziel PM1, PM2 bzw. PM3 eine Funktionalitätsinformation FI1, FI2 bzw. FI3 über die Funktionalität des betreffenden Produktionsmoduls sowie eine diesbezügliche Verfügbarkeitsinformation VI1, VI2 bzw. VI3 über die Verfügbarkeit dieser Funktionalität zugeordnet. Die Funktionalität kann hierbei z.B. Bohren, Schweißen, Fräsen und/oder Transportieren sein. Die Verfügbarkeitsinformation VI1, VI2 bzw. VI3 kann insbesondere eine Zeitangabe über einen Zeitraum, zu dem eine jeweilige Funktionalität tatsächlich verfügbar ist, umfassen. Dementsprechend kann einem jeweiligen Beförderungsziel eine zum Transport des Produkts P dorthin benötigte Transportzeit zugeordnet werden. Im Allgemeinen können in der lokalen Zuordnungstabelle ZT alle Angaben gespeichert und einem jeweiligen Beförderungsziel zugeordnet werden, die eine verteilte Implementierung sogenannter Scheduling-Algorithmen erlauben.

Darüber hinaus sind einem jeweiligen Beförderungsziel PM1, PM2 bzw. PM3 in der lokalen Zuordnungstabelle ZT physikalische Nebenbedingungen BC1, BC2 bzw. BC1 & BC3 zugeordnet, die das Produkt P auf dem Transportweg zum jeweiligen Beförderungsziel erfüllen muss. Die physikalischen Nebenbedingungen können z.B. Angaben über ein maximal zulässiges Gewicht und/oder maximal zulässige Abmessungen des Produkts umfassen. Die Schreibweise BC1 & BC3 ist hierbei so zu verstehen, dass das Produkt sowohl die Nebenbedingung BC1 als auch die Nebenbedingung BC3 erfüllen muss.

Das Weitergabemodul HO ist entsprechend dazu eingerichtet, die Ermittlung des Beförderungsziels und/oder die Selektion des Übergabeports abhängig von der dem Beförderungsziel zugeordneten Aufwandsinformation AI, Funktionalitätsinformation FI1, FI2, FI3, Verfügbarkeitsinformation VI1, VI2, VI3 und/oder der physikalischen Nebenbedingung BC1, BC2 bzw. BC1 & BC3 auszuführen.

Wie in Figur 2 veranschaulicht, wird durch das Abgleichmodul AM1 infolge der eintreffenden Änderungsinformation CI eine erste Zuordnungsinformation ZI1 generiert, die die Änderung der im Produktionssystem PS verfügbaren Funktionalität durch die Ankopplung des Produktionsmoduls PM3 repräsentiert. Im vorliegenden Ausführungsbeispiel umfasst die erste Zuordnungsinformation ZI1 einen Eintrag, der dem Produktionsmodul PM3 den Übergabeport PT3, einen Abstand 1 als Aufwandsinformation AI, die Funktionalitätsinformation FI3, die Verfügbarkeitsinformation VI3 sowie die physikalische Nebenbedingung BC3 zuordnet. Dieser Eintrag wird vom Abgleichmodul AM1 in der Zuordnungstabelle ZT1 zu deren iterativer Aktualisierung gespeichert. Darüber hinaus übermittelt das Abgleichmodul AM1 die Zuordnungsinformation ZI1 zum Abgleichmodul AM des Produktionsmoduls PM. Das Abgleichmodul AM aktualisiert die lokale Zuordnungstabelle ZT anhand der empfangenen ersten Zuordnungsinformation ZI1 dergestalt, dass das darin angegebene Produktionsmodul PM3 als neues Beförderungsziel dem Übergabeport PT1 zugeordnet wird, der demjenigen Produktionsmodul, hier PM1, zugewiesen wurde, von dem die erste Zuordnungsinformation ZI1 empfangen wurde. Weiterhin wird der in der ersten Zuordnungsinformation ZI1 als Aufwandsinformation AI angegebene Abstand 1 um den Abstand des Produktionsmoduls PM zum benachbarten Produktionsmodul PM1 inkrementiert, um so einen Abstand von 2 vom Produktionsmodul PM zum nicht benachbarten Produktionsmodul PM3 zu ermitteln. Der inkrementierte Abstand 2 wird in der lokalen Zuordnungstabelle ZT als Aufwandsinformation AI dem nicht benachbarten Produktionsmodul PM3 zugeordnet.

Ferner wird die in der ersten Zuordnungsinformation ZI1 enthaltene physikalische Nebenbedingung BC3 mit der für das Produktionsmodul PM spezifischen physikalischen Nebenbedingung BC1 verknüpft, um so die verknüpfte physikalische Nebenbedingung BC1 & BC3 für den Weg zum Beförderungsziel, hier PM3, zu erhalten. Die verknüpfte physikalische Nebenbedingung BC1 & BC3 wird dementsprechend in der lokalen Zuordnungstabelle ZT dem nicht benachbarten Beförderungsziel PM3 zugeordnet. Allgemein kann auf diese Weise z.B. ein Maximalgewicht als physikalische Nebenbedingung für den gesamten Weg zum Beförderungsziel PM3 lokal ermittelt werden als Minimum des in der lokalen Zuordnungstabelle ZT1 des übernehmenden benachbarten Produktionsmoduls PM1 angegebenen Maximalgewichts und des für das Produktionsmodul PM spezifischen Maximalgewichts. Ein solches Maximalgewicht kann auch abhängig von einer geometrischen Lage des Übergabeports und/oder dort herrschenden Hebelverhältnissen bestimmt werden. Analog dazu kann ein kumulativer Effekt von Nebenbedingungen hinsichtlich der geometrischen Abmessungen eines Produkts ermittelt und in der lokalen Zuordnungstabelle gespeichert werden.

Durch das Abgleichmodul AM wird anhand der ersten Zuordnungsinformation ZI1 und/oder der lokalen Zuordnungstabelle ZT die zweite Zuordnungsinformation ZI2 generiert. Die zweite Zuordnungsinformation ZI2 kann insbesondere einen anhand der ersten Zuordnungsinformation ZI1 aktualisierten Eintrag der lokalen Zuordnungstabelle ZT umfassen. In diesem Fall umfasst die zweite Zuordnungsinformation ZI2 einen Eintrag, der dem nicht benachbarten Produktionsmodul PM3 den Übergabeport PT1, den Abstand 2 als Aufwandsinformation AI, die Funktionalitätsinformation FI3, die Verfügbarkeitsinformation VI3 sowie die physikalische Nebenbedingung BC3 & BC1 zuordnet. Die zweite Zuordnungsinformation ZI2 wird durch das Abgleichmodul AM zum Abgleichmodul AM2 des Produktionsmoduls PM2 zusammen mit der Änderungsinformation CI übertragen. Durch die Änderungsinformation CI wird das Abgleichmodul AM2 dazu veranlasst, die Zuordnungstabelle ZT2 anhand der zweiten Zuordnungsinformation ZI2 iterativ zu aktualisieren.

Durch Empfang erster Zuordnungsinformation, Aktualisierung der jeweiligen lokalen Zuordnungstabelle anhand der empfangenen ersten Zuordnungsinformation und Weiterleiten zweiter Zuordnungsinformation werden die lokalen Zuordnungstabellen ZT, ZT1, ZT2 und ZT3 im Produktionssystem PS schrittweise, iterativ und inkrementell auf Basis der in den jeweiligen benachbarten Produktionsmodulen enthaltenen, lokalen Zuordnungstabellen aktualisiert. Jedes erfindungsgemäße Produktionsmodul vergleicht und aktualisiert seine eigene lokale Zuordnungstabelle mit den korrespondierenden lokalen Zuordnungstabellen seiner benachbarten Produktionsmodule in iterativer Weise, bis sich die lokalen Zuordnungstabellen nicht mehr verändern und alle im Produktionssystem PS verfügbaren Transportwege ermittelt sind. Dieser Prozess endet nach endlich vielen Schritten, wodurch eine Konvergenz erreicht ist.

Zu Beginn eines solchen Prozesses ist in der lokalen Zuordnungstabelle ZT des Produktionsmoduls PM lediglich vermerkt, an welchen Übergabeports Produkte entgegengenommen oder weitergegeben werden können. Für die Übergabeports, an denen Produkte entgegengenommen werden können, wird angegeben, zu welchen Übergabeports ein entgegengenommenes Produkt transportiert werden kann und welchen minimalen Aufwand dies verursacht.

Die lokalen Zuordnungstabellen ZT, ZT1, ZT2 und ZT3 im Produktionssystem PS sind vorzugsweise mit Versionsnummern versehen, die bei einer jeweiligen Änderung einer jeweiligen lokalen Zuordnungstabelle inkrementiert werden. Eine jeweilige initiale lokale Zuordnungstabelle erhält vorzugsweise die Versionsnummer 0.

In der lokalen Zuordnungstabelle ZT wird für jedes vom Produktionsmodul PM aus erreichbares - benachbartes oder nicht benachbartes - Produktionsmodul PM1, PM2, PM3,... ein Eintrag angelegt. In diese Einträge werden die Beförderungsziele übernommen, die in den korrespondierenden lokalen Zuordnungstabellen der benachbarten Produktionsmodule PM1, PM2 als Beförderungsziele eingetragen sind. Ebenso werden die Funktionalitäten, die in den korrespondierenden lokalen Zuordnungstabellen der benachbarten Produktionsmodule PM1, PM2 den Beförderungszielen zugeordnet sind, in der lokalen Zuordnungstabelle ZT diesen Beförderungszielen zugeordnet. Darüber hinaus wird der Transportaufwand zu einem jeweiligen Beförderungsziel ermittelt, z.B. als Summe, der in der korrespondierenden lokalen Zuordnungstabelle ZT1 bzw. ZT2 eines benachbarten Produktionsmoduls PM1 bzw. PM2 angegebenen Transportaufwands und dem Transportaufwand vom Produktionsmodul PM zum benachbarten Produktionsmodul PM1 bzw. PM2.

Weiterhin wird in der lokalen Zuordnungstabelle ZT vermerkt, auf welcher Version der korrespondierenden lokalen Zuordnungstabelle ZT1 bzw. ZT2 des benachbarten Produktionsmoduls PM1 bzw. PM2 ein jeweiliger Eintrag basiert. In dem gleichen Eintrag wird auch eine aktualisierte Versionsnummer der korrespondierenden lokalen Zuordnungstabelle ZT1 bzw. ZT2 angegeben, falls sich diese ändert. Wenn sich eine lokale Zuordnungstabelle in einem Produktionsmodul ändert, wird die Versionsnummer dieser lokalen Zuordnungstabelle inkrementiert und diese neue Versionsnummer jeweils in den lokalen Zuordnungstabellen der benachbarten Produktionsmodule als neue aktuelle Versionsnummer eingetragen. Dieser Aktualisierungsschritt bzw. Iterationsschritt wird im Produktionsmodul PM solange wiederholt, bis in allen der vorgenannten Einträge der lokalen Zuordnungstabelle ZT die Versionsnummern der korrespondierenden lokalen Zuordnungstabellen der benachbarten Produktionsmodule mit den aktuellen Versionsnummern identisch sind. Dieser Prozess wird durch alle erfindungsgemäßen Produktionsmodule im Produktionssystem PS verteilt ausgeführt und konvergiert nach endlich vielen Aktualisierungsschritten, zumindest solange im Produktionssystem PS keine erneuten Änderungen eintreten. Wird eine Änderung am Produktionssystem PS vorgenommen, wird der vorstehende Prozess neu in Gang gesetzt und die entsprechenden geänderten Angaben werden schrittweise durch lokale Interaktion zwischen benachbarten Produktionsmodulen über das Produktionssystem PS verbreitet, wobei die Versionsnummern der lokalen Zuordnungstabellen entsprechend inkrementiert werden.

Aufgrund der dezentral gesteuerten im Wesentlichen selbst organisierten Anpassung des Produktionssystems PS an Änderungen des Produktionssystems PS kann dieses erheblich flexibler auf solche Änderungen reagieren. Wenn z.B. ein Produktionsmodul bzw. eine Funktionalität ausfällt, wird diese Veränderung durch die jeweils benachbarten Produktionsmodule zu den anderen erfindungsgemäßen Produktionsmodulen des Produktionssystems PS verbreitet und deren lokale Zuordnungstabellen werden entsprechend angepasst. Auf diese Weise kann in vielen Fällen auch nach einem unvorhergesehenen Ausfall eines Produktionsmoduls die Produktion noch weitgehend aufrechterhalten werden.

## Patentansprüche

1. Produktionsmodul (PM) zum Bearbeiten oder Handhaben eines Produkts (P) in einem eine Vielzahl von Produktionsmodulen (PM, PM1,...,PM3) aufweisenden Produktionssystem (PS), mit
a) einem Produkterfassungsmodul (PE) zum Einlesen von dem Produkt (P) zugeordneten Produktparametern (PP),
b) Übergabeports (PT1, PT2) zum Weitergeben des Produkts (P) an zum Produktionsmodul (PM) benachbarte Produktionsmodule (PM1, PM2) des Produktionssystems (PS),
c) einem Interaktionsmodul (IA) zum Zuweisen eines jeweiligen benachbarten Produktionsmoduls (PM1, PM2) zu einem der Übergabeports (PT1, PT2),
d) einem Datenspeicher (MEM) zum Speichern einer lokalen Zuordnungstabelle (ZT), in der zum Produktionsmodul (PM) nicht benachbarte Beförderungsziele (PM3) im Produktionssystem (PS) jeweils einem der Übergabeports (PT1, PT2) zugeordnet sind,
e) einem Abgleichmodul (AM) zum iterativen Einlesen von erster Zuordnungsinformation (ZI1) einer korrespondierenden Zuordnungstabelle (ZT1) eines ersten benachbarten Produktionsmoduls (PM1), zum iterativen Aufbauen der lokalen Zuordnungstabelle (ZT) anhand der eingelesenen ersten Zuordnungsinformation (ZI1) sowie zum iterativen Weiterleiten von zweiter Zuordnungsinformation (ZI2) der lokalen Zuordnungstabelle (ZT) an ein zweites benachbartes Produktionsmodul (PM2), und
f) einem Weitergabemodul (HO)
- zum Ermitteln eines Beförderungsziels (DEST, PM2) für das Produkt (P) im Produktionssystem (PS) anhand der eingelesenen Produktparameter (PP),
- zum Selektieren eines Übergabeports (PT2), der dem ermittelten Beförderungsziel (DEST, PM2) in der lokalen Zuordnungstabelle (ZT) zugeordnet ist, und
- zum Weitergeben des Produkts (P) über den selektierten Übergabeport (PT2), wobei
g) das Abgleichmodul (AM) dazu eingerichtet ist, infolge einer eintreffenden Änderungsinformation (CI) einen Iterationsschritt beim Einlesen erster Zuordnungsinformation (ZI1), beim Aufbauen der lokalen Zuordnungstabelle (ZT) und/oder beim Weiterleiten zweiter Zuordnungsinformation (ZI2) auszuführen.

2. Produktionsmodul nach Anspruch 1, **dadurch gekennzeichnet, dass**
das Abgleichmodul (AM) dazu eingerichtet ist, ein in der korrespondierenden Zuordnungstabelle (ZT1) des ersten benachbarten Produktionsmoduls (PM1) angegebenes Beförderungsziel (PM3) in der lokalen Zuordnungstabelle (ZT) einem Übergabeport (PT1) zuzuordnen, der diesem ersten benachbarten Produktionsmodul (PM1) zugewiesen ist.

3. Produktionsmodul nach einem der vorhergehenden Ansprüche, **dadurch gekennzeichnet,**
**dass** die erste Zuordnungsinformation (ZI1), die zweite Zuordnungsinformation (ZI2) und/oder die lokale Zuordnungstabelle (ZT) einem Beförderungsziel (DEST) eine physikalische Nebenbedingung (BC1,...,BC3) zuordnen, die das Produkt (P) auf einem Transportweg zu diesem Beförderungsziel (DEST) zu erfüllen hat, und
**dass** das Weitergabemodul (HO) dazu eingerichtet ist, die physikalische Nebenbedingung (BC1,...,BC3) mit den eingelesenen Produktparametern (PP) abzugleichen und abhängig davon die Ermittlung des Beförderungsziels (DEST) und/oder die Selektion des Übergabeports (PT2) auszuführen.

4. Produktionsmodul nach Anspruch 3, **dadurch gekennzeichnet, dass**
das Abgleichmodul (AM) dazu eingerichtet ist, die einem Beförderungsziel in der ersten Zuordnungsinformation (ZI1) zugeordnete physikalische Nebenbedingung (BC3) mit einer lokalen physikalischen Nebenbedingung (BC1) des Produktionsmoduls (PM) zu verknüpfen und die verknüpfte physikalische Nebenbedingung (BC1&BC3) dem Beförderungsziel in der lokalen Zuordnungstabelle (ZT) sowie in der zweiten Zuordnungsinformation (ZI2) zuzuordnen.

5. Produktionsmodul nach einem der vorhergehenden Ansprüche, **dadurch gekennzeichnet, dass**
die erste Zuordnungsinformation (ZI1), die zweite Zuordnungsinformation (ZI2) und/oder die lokale Zuordnungstabelle (ZT) einem Beförderungsziel eine Aufwandsinformation (AI) über einen Beförderungsaufwand zu diesem Beförderungsziel, eine Funktionalitätsinformation (FI1,...,FI3) über eine Funktionalität dieses Beförderungsziels, eine Verfügbarkeitsinformation (VI1,...VI3) über eine Verfügbarkeit der Funktionalität und/oder eine Änderungsinformation (CI) über eine Änderung der Funktionalität oder der Verfügbarkeit zuordnen.

6. Produktionsmodul nach Anspruch 5, **dadurch gekennzeichnet, dass**
das Weitergabemodul (HO) dazu eingerichtet ist, die Ermittlung des Beförderungsziels (DEST) und/oder die Selektion des Übergabeports (PT2) abhängig von der dem Beförderungsziel (DEST) zugeordneten Aufwandsinformation (AI), Funktionalitätsinformation (FI1,...,FI3), Verfügbarkeitsinformation (VI1,...VI3) und/oder Änderungsinformation (CI) auszuführen.

7. Produktionsmodul nach Anspruch 5 oder 6, **dadurch gekennzeichnet, dass**
die Verfügbarkeitsinformation (VI1,...VI3) eine Zeitangabe über einen Zeitraum, in dem die Funktionalität zur Verfügung steht oder über einen Zeitpunkt einer Änderung der Funktionalität oder der Verfügbarkeit umfasst.

8. Produktionsmodul nach Anspruch 7, **dadurch gekennzeichnet, dass** die dem Beförderungsziel (DEST) zugeordnete Aufwandsinformation (AI) eine Transportzeit zu diesem Beförderungsziel umfasst, und
dass das Weitergabemodul (HO) dazu eingerichtet ist, die Ermittlung des Beförderungsziels (DEST) und/oder die Selektion des Übergabeports (PT2) abhängig von der Zeitangabe und der Transportzeit auszuführen.

9. Produktionsmodul nach einem der Ansprüche 5 bis 8, **dadurch gekennzeichnet, dass**
das Abgleichmodul (AM) dazu eingerichtet ist, ein Beförderungsziel (DEST), das in korrespondierenden Zuordnungstabellen (ZT1, ZT2) mehrerer erster benachbarter Produktionsmodule (PM1, PM2) angegeben ist, anhand einer darin jeweils zugeordneten Aufwandsinformation (AI) einem Übergabeport (PT1, PT2) in der lokalen Zuordnungstabelle (ZT) zuzuordnen, der einem benachbarten Produktionsmodul (PM1, PM2) mit einem minimalen Beförderungsaufwand zu diesem Beförderungsziel (DEST) zugewiesen ist.

10. Produktionsmodul nach einem der Ansprüche 5 bis 9, **dadurch gekennzeichnet,**
**dass** das Abgleichmodul (AM) dazu eingerichtet ist, für ein Beförderungsziel (DEST), das in korrespondierenden Zuordnungstabellen (ZT1, ZT2) mehrerer erster benachbarter Produktionsmodule (PM1, PM2) angegeben ist, mehrere Einträge in der lokalen Zuordnungstabelle (ZT) mit jeweils zugeordneter Aufwandsinformation (AI) anzulegen, und
**dass** das Weitergabemodul (HO) dazu eingerichtet ist, einen Übergabeport (PT1, PT2) zu selektieren, der einem benachbarten Produktionsmodul (PM1, PM2) mit einem minimalen Beförderungsaufwand zu diesem Beförderungsziel (DEST) zugewiesen ist.

11. Produktionsmodul nach einem der vorhergehenden Ansprüche, **dadurch gekennzeichnet, dass**
das Interaktionsmodul (IA) dazu eingerichtet ist, benachbarte Produktionsmodule (PM1, PM2), an die das Produkt (P) weitergegeben werden kann, dynamisch zu detektieren und infolge einer solchen Detektion eine Änderungsinformation (CI) zu generieren.

12. Produktionsmodul (PM) nach einem der vorhergehenden Ansprüche, **dadurch gekennzeichnet,**
**dass** die lokale Zuordnungstabelle (ZT) eine Versionsinformation enthält, die infolge einer eintreffenden Änderungsinformation (CI) und/oder eines Iterationsschrittes beim Einlesen erster Zuordnungsinformation (ZI1), beim Aufbauen der lokalen Zuordnungstabelle (ZT) und/oder beim Weiterleiten zweiter Zuordnungsinformation (ZI2) geändert wird, und
**dass** das Abgleichmodul (AM) dazu eingerichtet ist, beim Aufbau der lokalen Zuordnungstabelle (ZT) deren Versionsinformation mit einer Version der ersten Zuordnungsinformation (ZI1) zu vergleichen und abhängig davon die lokale Zuordnungstabelle (ZT) zu aktualisieren.

13. Produktionssystem mit Produktionsmodulen nach einem der vorhergehenden Ansprüche.

14. Verfahren zum Betreiben eines Produktionsmoduls (PM) nach einem der Ansprüche 1 bis 12, wobei
a) einem Produkt (P) zugeordnete Produktparameter (PP) eingelesen werden,
b) zum Produktionsmodul (PM) benachbarte Produktionsmodule (PM1, PM2) jeweils einem zur Weitergabe des Produkts (P) an das benachbarte Produktionsmodul (PM1, PM2) vorgesehenen Übergabeport (PT1, PT2) des Produktionsmoduls (PM) zugewiesen werden,
c) zum Produktionsmodul (PM) nicht benachbarte Beförderungsziele (PM3) für das Produkt (P) jeweils einem der Übergabeports (PT1, PT2) in einer lokalen Zuordnungstabelle (ZT) zugeordnet werden,
d) erste Zuordnungsinformation (ZI1) aus einer korrespondierenden Zuordnungstabelle (ZT1) eines ersten benachbarten Produktionsmoduls (PM1) iterativ eingelesen wird,
e) die lokale Zuordnungstabelle (ZT) anhand der eingelesenen ersten Zuordnungsinformation (ZI1) iterativ aufgebaut wird,
f) zweite Zuordnungsinformation (ZI2) aus der lokalen Zuordnungstabelle (ZT) an ein zweites benachbartes Produktionsmodul (PM2) iterativ weitergeleitet wird, wobei
g) ein Iterationsschritt beim Einlesen erster Zuordnungsinformation (ZI1), beim Aufbauen der lokalen Zuordnungstabelle (ZT) und/oder beim Weiterleiten zweiter Zuordnungsinformation (ZI2) infolge einer eintreffenden Änderungsinformation (CI) ausgeführt wird,
h) anhand der eingelesenen Produktparameter (PP) ein Beförderungsziel (DEST, PM2) für das Produkt (P) ermittelt wird,
i) ein Übergabeport (PT2) selektiert wird, der dem ermittelten Beförderungsziel (DEST, PM2) in der lokalen Zuordnungstabelle (ZT) zugeordnet ist, und
j) das Produkt (P) über den selektierten Übergabeport (PT2) weitergegeben wird.

15. Computerprogrammprodukt für ein Produktionsmodul (PM) nach einem der Ansprüche 1 bis 12, eingerichtet zum Ausführen eines Verfahrens nach Anspruch 14.

## Claims

1. Production module (PM) for processing or handling a product (P) in a production system (PS) having a multiplicity of production modules (PM, PM1, ..., PM3), comprising
a) a product acquisition module (PE) for reading in product parameters (PP) assigned to the product (P),
b) transfer ports (PT1, PT2) for handing over the product (P) to production modules (PM1, PM2) of the production system (PS) that are adjacent to the production module (PM),
c) an interaction module (IA) for allocating a respective adjacent production module (PM1, PM2) to one of the transfer ports (PT1, PT2),
d) a data memory (MEM) for storing a local assignment table (ZT), in which conveying destinations (PM3) that are not adjacent to the production module (PM) in the production system (PS) are assigned in each case to one of the transfer ports (PT1, PT2),
e) a balancing module (AM) for iteratively reading in first assignment information (ZI1) of a corresponding assignment table (ZT1) of a first adjacent production module (PM1), for iteratively setting up the local assignment table (ZT) on the basis of the first assignment information (ZI1) read in, and for iteratively forwarding second assignment information (ZI2) of the local assignment table (ZT) to a second adjacent production module (PM2), and
f) a handover module (HO)
- for determining a conveying destination (DEST, PM2) for the product (P) in the production system (PS) on the basis of the product parameters (PP) read in,
- for selecting a transfer port (PT2) assigned to the determined conveying destination (DEST, PM2) in the local assignment table (ZT) and
- for handing over the product (P) via the selected transfer port (PT2), wherein
g) the balancing module (AM) is configured to perform, on account of arriving change information (CI), an iteration step when reading in first assignment information (ZI1), when setting up the local assignment table (ZT) and/or when forwarding second assignment information (ZI2).

2. Production module according to Claim 1, **characterized in that**
the balancing module (AM) is configured to assign a conveying destination (PM3) indicated in the corresponding assignment table (ZT1) of the first adjacent production module (PM1) in the local assignment table (ZT) to a transfer port (PT1) allocated to said first adjacent production module (PM1).

3. Production module according to either of the preceding claims, **characterized**
**in that** the first assignment information (ZI1), the second assignment information (ZI2) and/or the local assignment table (ZT) assign to a conveying destination (DEST) a physical constraint (BC1, ..., BC3) that has to be fulfilled by the product (P) on a transport path to said conveying destination (DEST), and
**in that** the handover module (HO) is configured to balance the physical constraint (BC1, ..., BC3) with the product parameters (PP) read in and, in a manner dependent thereon, to perform the determination of the conveying destination (DEST) and/or the selection of the transfer port (PT2).

4. Production module according to Claim 3, **characterized in that**
the balancing module (AM) is configured to link the physical constraint (BC3) assigned to a conveying destination in the first assignment information (ZI1) with a local physical constraint (BC1) of the production module (PM) and to assign the linked physical constraint (BC1&BC3) to the conveying destination in the local assignment table (ZT) and in the second assignment information (ZI2).

5. Production module according to any of the preceding claims, **characterized in that**
the first assignment information (ZI1), the second assignment information (ZI2) and/or the local assignment table (ZT) assign to a conveying destination outlay information (AI) about a conveying outlay with respect to said conveying destination, functionality information (FI1, ..., FI3) about a functionality of said conveying destination, availability information (VI1, ..., VI3) about an availability of the functionality and/or change information (CI) about a change in the functionality or the availability.

6. Production module according to Claim 5, **characterized in that**
the handover module (HO) is configured to perform the determination of the conveying destination (DEST) and/or the selection of the transfer port (PT2) depending on the outlay information (AI), functionality information (FI1, ..., FI3), availability information (VI1, ..., VI3) and/or change information (CI) assigned to the conveying destination (DEST).

7. Production module according to Claim 5 or 6, **characterized in that**
the availability information (VI1, ..., VI3) comprises a time indication about a period of time in which the functionality is available or about a point in time of a change in the functionality or the availability.

8. Production module according to Claim 7, **characterized in that** the outlay information (AI) assigned to the conveying destination (DEST) comprises a transport time with respect to said conveying destination, and
**in that** the handover module (HO) is configured to perform the determination of the conveying destination (DEST) and/or the selection of the transfer port (PT2) depending on the time indication and the transport time.

9. Production module according to any of Claims 5 to 8, **characterized in that**
the balancing module (AM) is configured to assign a conveying destination (DEST) indicated in corresponding assignment tables (ZT1, ZT2) of a plurality of first adjacent production modules (PM1, PM2), on the basis of outlay information (AI) respectively assigned therein, to a transfer port (PT1, PT2) in the local assignment table (ZT) that is allocated to an adjacent production module (PM1, PM2) with a minimum conveying outlay with respect to said conveying destination (DEST).

10. Production module according to any of Claims 5 to 9, **characterized**
**in that** the balancing module (AM) is configured to create, for a conveying destination (DEST) indicated in corresponding assignment tables (ZT1, ZT2) of a plurality of first adjacent production modules (PM1, PM2), a plurality of entries in the local assignment table (ZT) with respectively assigned outlay information (AI), and
**in that** the handover module (HO) is configured to select a transfer port (PT1, PT2) that is allocated to an adjacent production module (PM1, PM2) with a minimum conveying outlay with respect to said conveying destination (DEST).

11. Production module according to any of the preceding claims, **characterized in that**
the interaction module (IA) is configured dynamically to detect adjacent production modules (PM1, PM2) to which the product (P) can be handed over, and to generate change information (CI) on account of such a detection.

12. Production module (PM) according to any of the preceding claims, **characterized**
**in that** the local assignment table (ZT) contains version information that is changed on account of arriving change information (CI) and/or on account of an iteration step when reading in first assignment information (ZI1), when setting up the local assignment table (ZT) and/or when forwarding second assignment information (ZI2), and
**in that** the balancing module (AM) is configured, when setting up the local assignment table (ZT), to compare the version information thereof with a version of the first assignment information (ZI1) and to update the local assignment table (ZT) in a manner dependent thereon.

13. Production system comprising production modules according to any of the preceding claims.

14. Method for operating a production module (PM) according to any of Claims 1 to 13, wherein
a) production parameters (PP) assigned to a product (P) are read in,
b) production modules (PM1, PM2) adjacent to the production module (PM) are allocated in each case to a transfer port (PT1, PT2) of the production module (PM) that is provided for handing over the product (P) to the adjacent production module (PM1, PM2),
c) conveying destinations (PM3) that are not adjacent to the production module (PM) for the product (P) are assigned in each case to one of the transfer ports (PT1, PT2) in a local assignment table (ZT),
d) first assignment information (ZI1) from a corresponding assignment table (ZT1) of a first adjacent production module (PM1) is iteratively read in,
e) the local assignment table (ZT) is iteratively set up on the basis of the first assignment information (ZI1) read in,
f) second assignment information (ZI2) from the local assignment table (ZT) is iteratively forwarded to a second adjacent production module (PM2), wherein
g) an iteration step when reading in first assignment information (ZI1), when setting up the local assignment table (ZT) and/or when forwarding second assignment information (Z12) is performed on account of arriving change information (CI),
h) a conveying destination (DEST, PM2) for the product (P) is determined on the basis of the product parameters (PP) read in,
i) a transfer port (PT2) is selected which is assigned to the determined conveying destination (DEST, PM2) in the local assignment table (ZT), and
j) the product (P) is handed over via the selected transfer port (PT2).

15. Computer program product for a production module (PM) according to any of Claims 1 to 12, configured for performing a method according to Claim 14.

## Revendications

1. Module de production (PM) pour traiter ou manipuler un produit (P) dans un système de production (PS) comprenant une pluralité de modules de production (PM, PM1, ... PM3), comprenant :
a) un module de détection de produit (PE) pour lire des paramètres de produit (PP) attribués au produit (P),
b) des ports de transfert (PT1, PT2) pour transmettre le produit (P) à des modules de production (PM1, PM2) du système de production (PS) voisins du module de production (PM),
c) un module d'interaction (IA) pour allouer un module de production (PM1, PM2) voisin respectif à un des ports de transfert (PT1, PT2),
d) une mémoire de données (MEM) pour conserver en mémoire un tableau d'attribution (ZT) local, dans lequel des cibles d'acheminement (PM3) dans le système de production (PS) non voisines du module de production (PM) sont attribuées respectivement à un des ports de transfert (PT1, PT2),
e) un module d'alignement (AM) pour la lecture itérative d'une première information d'attribution (ZI1) d'un tableau d'attribution (ZT1) correspondant d'un premier module de production (PM1) voisin, pour la constitution itérative du tableau d'attribution (ZT) local à l'aide de la première information d'attribution (ZI1) lue ainsi que pour la transmission itérative d'une deuxième information d'attribution (ZI2) du tableau d'attribution (ZT) local à un deuxième module de production (PM2) voisin, et
f) un module de transmission (HO)
- pour déterminer une cible d'acheminement (DEST, PM2) pour le produit (P) dans le système de production (PS) à l'aide des paramètres de produit (PP) lus,
- pour sélectionner un port de transfert (PT2) qui est attribué à la cible d'acheminement (DEST, PM2) déterminée dans le tableau d'attribution (ZT) local, et
- pour transmettre le produit (P) par le biais du port de transfert (PT2) sélectionné, dans lequel
g) le module d'alignement (AM) est conçu, suite à une information de modification (CI) entrante, pour exécuter une étape d'itération lors de la lecture de la première information d'attribution (ZI1), lors de la constitution du tableau d'attribution (ZT) local et/ou lors de la transmission d'une deuxième information d'attribution (ZI2).

2. Module de production selon la revendication 1, **caractérisé en ce que**
le module d'alignement (AM) est conçu pour attribuer une cible d'acheminement (PM3) dans le tableau d'attribution (ZT) local indiquée dans le tableau d'attribution (ZT1) correspondant du premier module de production (PM1) à un port de transfert (PT1) qui est alloué à ce premier module de production (PM1) voisin.

3. Module de production selon l'une des revendications précédentes, **caractérisé en ce que**
la première information d'attribution (ZI1), la deuxième information d'attribution (ZI2) et/ou le tableau d'attribution (ZT) local attribuent une contrainte physique (BC1, ... BC3) à une cible d'acheminement (DEST), que le produit (P) doit remplir sur un trajet de transport vers cette cible d'acheminement (DEST), et
que le module de transmission (HO) est conçu pour équilibrer la contrainte physique (BC1, ... BC3) avec les paramètres de produit (PP) lus et exécuter la détermination de la cible d'acheminement (DEST) et/ou la sélection du port de transfert (PT2) en fonction de cela.

4. Module de production selon la revendication 3, **caractérisé en ce que**
le module d'alignement (AM) est conçu pour relier la contrainte physique (BC3) attribuée à une cible d'acheminement dans la première information d'attribution (ZI1) à une contrainte physique (BC1) locale du module de production (PM) et pour attribuer la contrainte physique (BC1&BC3) liée à la cible d'acheminement dans le tableau d'attribution (ZT) local ainsi que dans la deuxième information d'attribution (ZI2).

5. Module de production selon l'une des revendications précédentes, **caractérisé en ce que**
la première information d'attribution (ZI1), la deuxième information d'attribution (ZI2) et/ou le tableau d'attribution (ZT) local attribuent une information de dépense (AI) à une cible d'acheminement à propos d'une dépense d'acheminement vers cette cible d'acheminement, une information de fonctionnalité (FI1, ..., FI3) à propos d'une fonctionnalité de cette cible d'acheminement, une information de disponibilité (VI1, ... VI3) à propos d'une disponibilité de la fonctionnalité et/ou une information de modification (CI) à propos d'une modification de la fonctionnalité ou de la disponibilité.

6. Module de production selon la revendication 5, **caractérisé en ce que** le module de transmission (HO) est conçu pour exécuter la détermination de la cible d'acheminement (DEST) et/ou la sélection du port de transfert (PT2) en fonction de l'information de dépense (AI), de l'information de fonctionnalité (FI1, ..., FI3), de l'information de disponibilité (VI1, ... VI3) et/ou de l'information de modification (CI) attribuée à la cible d'acheminement (DEST).

7. Module de production selon la revendication 5 ou 6, **caractérisé en ce que** l'information de disponibilité (VI1, ... VI3) comprend une indication temporelle sur une durée dans laquelle la fonctionnalité est à disposition ou sur un moment d'une modification de la fonctionnalité ou de la disponibilité.

8. Module de production selon la revendication 7, **caractérisé en ce que** l'information de dépense (AI) attribuée à la cible d'acheminement (DEST) comprend un temps de transport vers cette cible d'acheminement, et
que le module de transmission (HO) est conçu pour exécuter la détermination de la cible d'acheminement (DEST) et/ou la sélection du port de transfert (PT2) en fonction de l'indication temporelle et du temps de transport.

9. Module de production selon l'une des revendications 5 à 8, **caractérisé en ce que**
le module d'alignement (AM) est conçu pour attribuer une cible d'acheminement (DEST) qui est indiquée dans des tableaux d'attribution (ZT1, ZT2) correspondants de plusieurs premiers modules de production (PM1, PM2) voisins, à l'aide d'une information de dépense (AI) attribuée respectivement dedans, à un port de transfert (PT1, PT2) dans le tableau d'attribution (ZT) local qui est alloué à un module de production (PM1, PM2) voisin avec une dépense d'acheminement minimale vers cette cible d'acheminement (DEST).

10. Module de production selon l'une des revendications 5 à 9, **caractérisé en ce que**
le module d'alignement (AM) est conçu pour placer plusieurs entrées dans le tableau d'attribution (ZT) local avec information de dépense (AI) attribuée respective, pour une cible d'acheminement (DEST) qui est indiquée dans des tableaux d'attribution (ZT1, ZT2) correspondants de plusieurs premiers modules de production (PM1, PM2) voisins, et
que le module de transmission (HO) est conçu pour sélectionner un port de transfert (PT1, PT2) qui est alloué à un module de production (PM1, PM2) voisin avec une dépense d'acheminement minimale vers cette cible d'acheminement (DEST).

11. Module de production selon l'une des revendications précédentes, **caractérisé en ce que**
le module d'interaction (IA) est conçu pour détecter de façon dynamique des modules de production (PM1, PM2) voisins auxquels le produit (P) peut être transmis et générer une information de modification (CI) à la suite d'une telle détection.

12. Module de production (PM) selon l'une des revendications précédentes, **caractérisé en ce que**
le tableau d'attribution (ZT) local contient une information de version qui est modifiée à la suite d'une information de modification (CI) entrante et/ou d'une étape d'itération lors de la lecture de la première information d'attribution (ZT1), lors de la constitution du tableau d'attribution local (ZT) et/ou lors de la transmission de la deuxième information d'attribution (ZI2), et
que le module d'alignement (AM) est conçu pour comparer l'information de version du tableau d'attribution (ZT) local lors de sa constitution à une version de la première information d'attribution (ZI1) et actualiser le tableau d'attribution (ZT) local en fonction de cela.

13. Système de production comprenant des modules de production selon l'une des revendications précédentes.

14. Procédé d'exploitation d'un module de production (PM) selon l'une des revendications 1 à 12, dans lequel
a) des paramètres de produit (PP) attribués à un produit (P) sont lus,
b) des modules de production (PM1, PM2) voisins du module de production (PM) sont alloués respectivement à un port de transfert (PT1, PT2) du module de production (PM) prévu pour la transmission du produit (P) au module de production (PM1, PM2) voisin,
c) des cibles d'acheminement (PM3) pour le produit (P) non voisines du module de production (PM) sont attribuées respectivement à un des ports de transfert (PT1, PT2) dans un tableau d'attribution (ZT) local,
d) une première information d'attribution (ZI1) d'un tableau d'attribution (ZT1) correspondant d'un premier module de production (PM1) voisin est lue de manière itérative,
e) le tableau d'attribution (ZT) local est constitué de manière itérative à l'aide de la première information d'attribution (ZI1) lue,
f) une deuxième information d'attribution (ZI2) est transmise de manière itérative du tableau d'attribution (ZT) local à un deuxième module de production (PM2) voisin, dans lequel
g) une étape d'itération lors de la lecture de la première information d'attribution (ZI1), lors de la constitution du tableau d'attribution (ZT) local et/ou de la transmission de la deuxième information d'attribution (ZI2) est exécutée à la suite d'une information de modification (CI) entrante,
h) à l'aide des paramètres de produit (PP) lus, une cible d'acheminement (DEST, PM2) pour le produit (P) est déterminée,
i) un port de transfert (PT2) est sélectionné qui est attribué à la cible d'acheminement (DEST, PM2) déterminée dans le tableau d'attribution (ZT) local, et
j) le produit (P) est transmis par le biais du port de transfert (PT2) sélectionné.

15. Produit de logiciel informatique pour un module de production (PM) selon l'une des revendications 1 à 12, conçu pour exécuter un procédé selon la revendication 14.
